# EUROPEAN PATENT SPECIFICATION

(11) **EP 3 647 193 B1**
(45) Date of publication and mention of the grant of the patent: **16.12.2020**
(21) Application number: 19206535.7
(22) Date of filing: 31.10.2019
(51) Int. Cl.: B64C 29/00, B64C 27/28, B64D 1/22, B64C 11/28, B64C 27/52, B64C 29/02, B64C 39/08, B64D 27/24

(54) **VERTICAL TAKEOFF AND LANDING DUAL-WING AERIAL VEHICLE**
DOPPELFLÜGEL-LUFTFAHRZEUG MIT SENKRECHTSTART UND -LANDUNG
VÉHICULE AÉRIEN À DEUX AILES À DÉCOLLAGE ET ATTERRISSAGE VERTICAUX

(30) Priority: 02.11.2018 US 201816179544
(43) Date of publication of application: 06.05.2020
(73) Proprietor: Bell Textron Inc., Fort Worth, TX 76101 (US)
(72) Inventor: CAMPBELL, Kip Gregory, Hurst, TX 76053 (US)
(74) Representative: Barker Brettell LLP

(56) References cited:
- EP-A1- 3 263 456
- CN-A- 107 571 994
- GB-A- 2 550 489
- KR-B1- 101 895 366
- US-A1- 2018 002 016

## Description

### TECHNICAL FIELD

This disclosure relates generally to tiltrotor aircraft and, more particularly, to a vertical takeoff and landing ("VTOL") canard or tandem wing aerial vehicle.

### BACKGROUND

Unlike fixed-wing aircraft, vertical takeoff and landing ("VTOL") aircraft do not require runways. Instead, VTOL aircraft are capable of taking off, hovering, and landing vertically. One example of VTOL aircraft is a helicopter, which is a rotorcraft having one or more rotors that provide vertical lift and forward thrust to the aircraft. Helicopter rotors not only enable hovering and vertical takeoff and vertical landing, but also enable forward, aftward, and lateral flight. These attributes make helicopters highly versatile for use in congested, isolated or remote areas where fixed-wing aircraft may be unable to take off and land. Helicopters, however, typically lack the forward airspeed of fixed-wing aircraft.

A tiltrotor is another example of a VTOL aircraft. Tiltrotor aircraft utilize tiltable rotor systems that may be transitioned between a forward thrust orientation and a vertical lift orientation. The rotor systems are tiltable relative to one or more fixed wings such that the associated proprotors have a generally horizontal plane of rotation for vertical takeoff, hovering, and vertical landing and a generally vertical plane of rotation for forward flight, or airplane mode, in which the fixed wing or wings provide lift. In this manner, tiltrotor aircraft combine the vertical lift capability of a helicopter with the speed and range of fixed-wing aircraft.

VTOL aircraft may be manned or unmanned. An unmanned aerial vehicle ("UAV"), also commonly referred to as a "drone," is an aircraft without a human pilot aboard. UAVs may be used to perform a variety of tasks, including filming, package delivery, surveillance, and other applications. A UAV typically forms a part of an unmanned aircraft system ("UAS") that includes the UAV, a ground-based controller, and a system of communication between the vehicle and controller.

US2018/002016 describes a passenger pod assembly transportation system including a transportation services provider computing system and a plurality of flying frame flight control systems, wherein the system is configured to receive, at the transportation services provider computing system, a request for transportation of a passenger pod assembly having a current location and a destination; upload a flight plan to a flight control system of a flying frame including an airframe and a propulsion system; dispatch the flying frame to the current location of the passenger pod assembly; couple the flying frame to the passenger pod assembly at the current location of the passenger pod assembly; transport the passenger pod assembly by air from the current location of the passenger pod assembly to the destination of the passenger pod assembly; and decouple the passenger pod assembly from the flying frame at the destination of the passenger pod assembly.

KR101895366B describes a tandem wing aircraft with vertical take-off and landing capability. Two wings are coupled to each other using two booms which extend longitudinally between the forward and the rear wing. Two tiltable aft propulsion systems are coupled to the aft ends of the booms.

### SUMMARY

An aircraft is described and includes an airframe including first and second wings each having first and second oppositely disposed wing tips; wherein the first and second wings are arranged in a tandem wing configuration or a canard configuration; first and second booms respectively extending longitudinally between the first and second wings and having forward and aft ends; first and second tail assemblies respectively coupled to aft ends of the first and second booms; first and second forward propulsion assemblies respectively coupled to the forward ends of the first and second booms, wherein the first and second forward propulsion assemblies are tiltable between a vertical takeoff and landing ("VTOL") flight mode orientation and a forward flight mode orientation; first and second aft propulsion assemblies respectively coupled to upper ends of the tail assemblies, wherein the first and second aft propulsion assemblies are tiltable between a VTOL flight mode orientation and a forward flight mode orientation; and a payload module removably coupled to the airframe.

### BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements.
**FIGURES 1A-1H** arc schematic illustrations of a VTOL aircraft having upwardly tiltable forward and aft rotors in accordance with embodiments of the present disclosure.
**FIGURE 2** is block diagram of a propulsion and control system for a VTOL aircraft having upwardly tiltable forward and aft rotors in accordance with embodiments of the present disclosure.
**FIGURES** 3A-3I are schematic illustrations of a VTOL aircraft having upwardly tiltable forward and aft rotors in a sequential flight operating scenario in accordance with embodiments of the present disclosure.
**FIGURE 4** is a block diagram of a control system for a VTOL aircraft having upwardly tiltable forward and aft rotors in accordance with embodiments of the present disclosure.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions may be made to achieve the developer's specific goals, including compliance with system, business, and/or legal constraints, which may vary from one implementation to another. Moreover, it will be appreciated that, while such a development effort might be complex and time-consuming, it would nevertheless be a routine undertaking for those of ordinary skill in the art having the benefit of this disclosure.

While the making and using of various embodiments of the present disclosure are discussed in detail below, it should be appreciated that the present disclosure provides many applicable inventive concepts, which can be embodied in a wide variety of specific contexts. The specific embodiments discussed herein are merely illustrative and do not delimit the scope of the present disclosure. In the interest of clarity, not all features of an actual implementation may be described in the present disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom" or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature) of an element, operations, and/or conditions, the phrase "between X and Y" represents a range that includes X and Y.

Further, as referred to herein in this Specification, the terms "forward", "aft", "inboard", and "outboard" may be used to describe relative relationship(s) between components and/or spatial orientation of aspect(s) of a component or components. The term "forward" may refer to a special direction that is closer to a front of an aircraft relative to another component or component aspect(s). The term "aft" may refer to a special direction that is closer to a rear of an aircraft relative to another component or component aspect(s). The term "inboard" may refer to a location of a component that is within the fuselage of an aircraft and/or a spatial direction that is closer to or along a centerline of the aircraft relative to another component or component aspect(s), wherein the centerline runs in a between the front and the rear of the aircraft. The term "outboard" may refer to a location of a component that is outside the fuselage of an aircraft and/or a special direction that is farther from the centerline of the aircraft relative to another component or component aspect(s).

Still further, the present disclosure may repeat reference numerals and/or letters in the various examples. This repetition is for the purpose of simplicity and clarity and does not in itself dictate a relationship between the various embodiments and/or configurations discussed. Example embodiments that may be used to implement the features and functionality of this disclosure will now be described with more particular reference to the accompanying FIGURES.

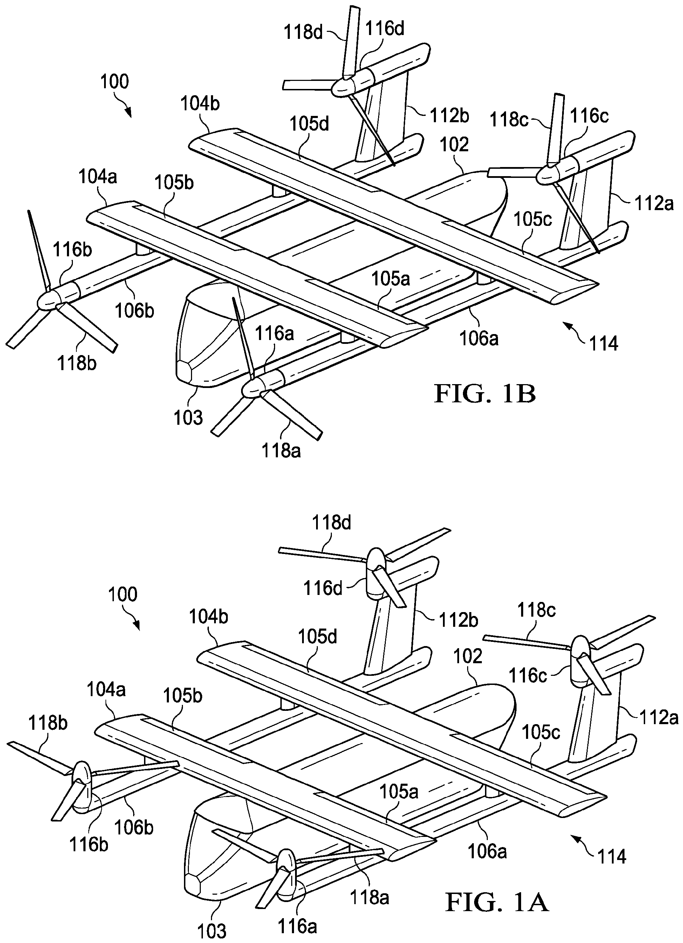

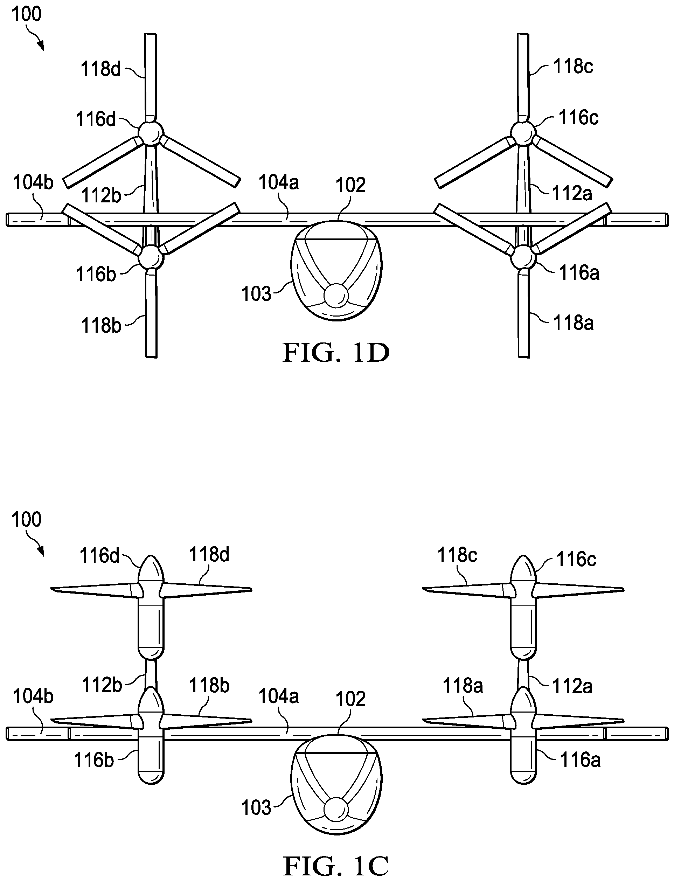

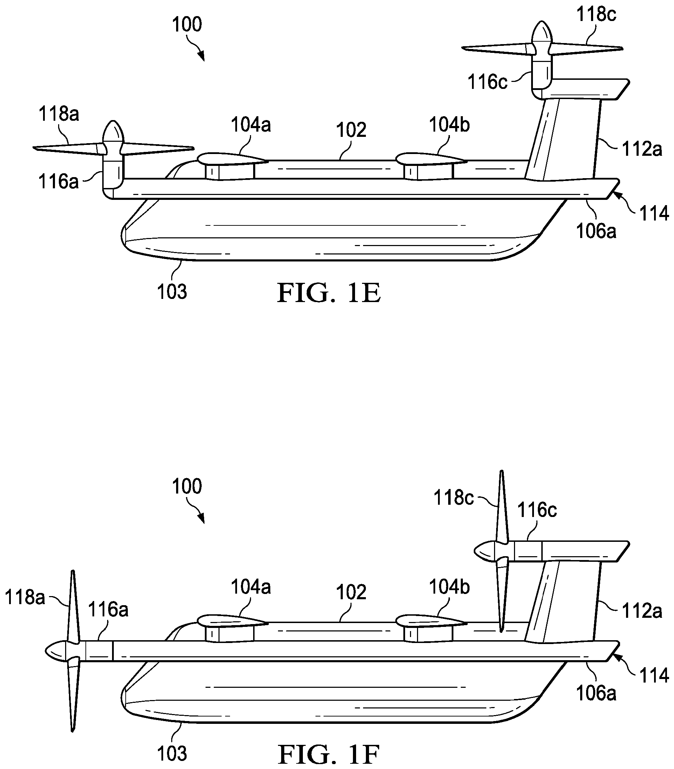

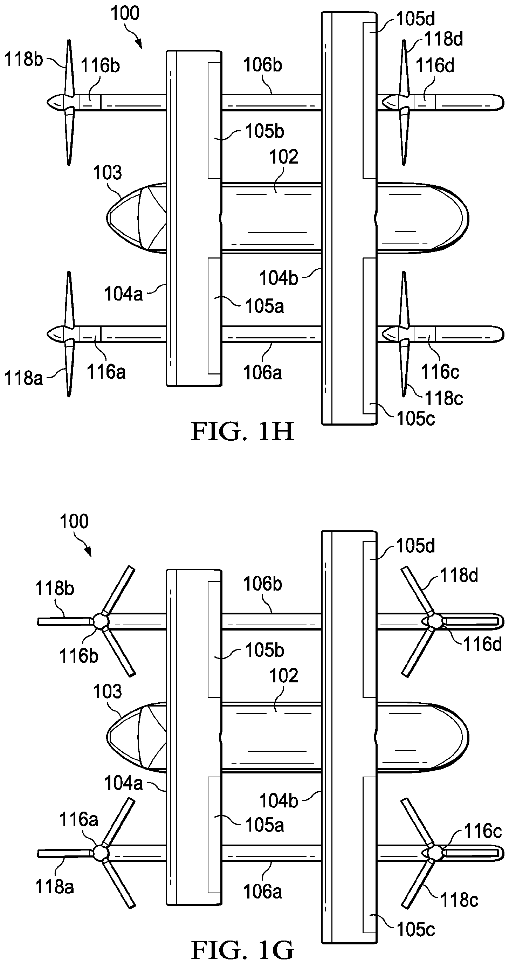

FIGUREs 1A-1H depict various views of a VTOL aircraft 100 having upwardly tiltable forward and aft rotors. In the illustrated embodiment, aircraft 100 has a longitudinally extending fuselage 102 to which may be attached a detachable payload module, or cargo pod, 103. Aircraft 100 includes a forward wing 104a that extends laterally from both sides of fuselage 102 proximate a forward end thereof and an aft wing 104b that extends laterally from both sides of the fuselage 102 proximate a tail end thereof. Each of wings 104a and 104b may have an airfoil cross-section that generates lift responsive to the forward airspeed of aircraft 100. It will be recognized that fuselage 102 may not be required if all flight control and battery components can fit within one or both wings 104a, 104b.

In one embodiment the wings 104a, 104b are arranged such that the aircraft 100 is a tandem wing aircraft, in which both wings contribute to lift. In particular, in a tandem wing design, the lift vectors on the wings are spread longitudinally, allowing the wings to act together to achieve control and stability. In another embodiment, the wings 104a, 104b are arranged such that the aircraft 100 is a canard aircraft. In such an arrangement, the wing 104b is designated the "main" wing and the wing 104a is a forewing, the purpose of which is to reduce main wing loading, better control main wing airflow and/or to increase the maneuverability of aircraft 100, especially at high angles of attack or during a stall.

In the illustrated embodiment, wings 104a, 104b, include flaperons 105a-105d that provide aerodynamic surfaces for controlling, for example, pitch and roll of aircraft 100 during forward flight, or airplane mode. Wings 104a, 104b, also includes oppositely disposed wing tips 105e-105h that are distal from fuselage 102. Wings 104a, 104b, are preferably formed from high strength and lightweight materials such as metals, polymers, fiberglass, carbon and combinations thereof.

Aircraft 100 includes a pair of booms 106a, 106b, that are connected and extend perpendicularly to wings 104a, 104b, and extend parallel to the fuselage 102. Boom 106a includes a forward end and an aft end. Similarly, boom 106b includes a forward end and an aft end. Booms 106a, 106b, are preferably formed from high strength and lightweight materials such as metals, polymers, fiberglass, carbon and combinations thereof. Aft end of boom 106a supports a tail assembly 112a depicted as a vertical stabilizer that may include a rudder to aid in yaw stability and control during forward flight of aircraft 100. Likewise, aft end of boom 106b supports a tail assembly 112b depicted as a vertical stabilizer that may include a rudder to aid in yaw stability and control during forward flight of aircraft 100. Wings 104a, 104b, and booms 106a, 106b, may include internal passageways operable to contain communication lines such as electrical cables, data cables and the like. Together, fuselage 102, wings 104a, 104b, and booms 106a, 106b as well as various frames, supports, longerons, stringers, bulkheads, spars, ribs, skins and the like may be considered to be the airframe 114 of aircraft 100.

Aircraft 100 is operable to transition between a vertical lift orientation, as best seen in FIGUREs 1A, 1C, IE, 1G, and a forward thrust orientation, as best seen in FIGUREs 1B, ID, IF, 1H. In the illustrated embodiment, a distributed propulsion system is coupled to airframe 114. The distributed propulsion system includes a plurality of propulsion assemblies 116 that may be permanently mounted or independently attachable to and detachable from airframe 114. As illustrated, the distributed propulsion system includes four independently operating propulsion assemblies 116a, 116b, 116c, and 116d each including a rotor 118a, 118b, 118c, and 118d, respectively. Propulsion assemblies 116a, 116b are respectively coupled to forward ends of booms 106a, 106b and may be referred to as forward propulsion assemblies 116a, 116b. Propulsion assemblies 116c, 116d, are respectively coupled to aft ends of booms 106a, 106b and may be referred to as aft propulsion assemblies 116c, 116d. Forward propulsion assemblies 116a, 116b, are forward tiltable between a vertical lift orientation (as shown in FIGURE 1A, for example), and a forward thrust orientation (as shown in FIGURE 1B, for example). Similarly, aft propulsion assemblies 116c, 116d, are forward tiltable between a vertical lift orientation (as shown in FIGURE 1A, for example), and a forward thrust orientation (as shown in FIGURE 1B, for example). In the illustrated embodiments, when propulsion assemblies 116a-116d are in the forward thrust orientation (FIGURE 1B, for example), rotors 118a-118d operate as tractor propellers.

As discussed herein, each propulsion assembly 116a-116d is independently controllable such that operational changes of certain ones of propulsion assemblies 116a-116d within the distributed propulsion system enable pitch, yaw and roll control of aircraft 100 during VTOL operations. For example, by changing the thrust output of forward propulsion assemblies 116a, 116b relative to aft propulsion assemblies 116c, 116d, pitch control is achieved. As another example, by changing the thrust output of propulsion assemblies 116a, 116c, relative to propulsion assemblies 116b, 116d, roll control is achieved. Changing the thrust output of a particular one of the propulsion assemblies 116a-116d may be accomplished by changing the rotational speed and/or blade pitch of the respective rotors 118a-118d. It is noted that some or all of propulsion assemblies 116a-116d may incorporate fixed pitch rotors. Alternatively, some or all of propulsion assemblies 116a-116d may incorporate rotors operable for collective and/or cyclic pitch control. In one implementation, forward propulsion assemblies 116a, 116b, have collective pitch control and aft propulsion assemblies 116c, 116d, have fixed pitch rotors.

As discussed herein, each propulsion assembly 116a-116d is independently controllable such that operational changes of certain ones of the propulsion assemblies within the distributed propulsion system enable pitch, yaw, and roll control of aircraft 100 during VTOL operations. For example, by changing the thrust output of forward propulsion assemblies 116a, 116b relative to aft propulsion assemblies 116c, 116d, pitch control is achieved. As another example, by changing the thrust output of propulsion assemblies 116a, 116c relative to propulsion assemblies 116b, 116d, roll control is achieved. Changing the thrust output of a particular one of the propulsion assemblies 116a, 116b, 116c, 116d may be accomplished by changing the rotational speed and/or blade pitch of the respective rotors 118a, 118b, 118c, 118d. It is noted that some or all of propulsion assemblies 116a, 116b, 116c, 116d may incorporate fixed pitch rotors. Alternatively, some or all of propulsion assemblies 116a, 116b, 116c, 116d may incorporate rotors operable for collective and/or cyclic pitch control. In one implementation, forward propulsion assemblies 116a, 116b have collective pitch control and aft propulsion assemblies 116c, 116d have fixed pitch rotors. Yaw control or torque balance of aircraft 100 during VTOL operations may be achieved by counter-rotating forward propulsion assemblies 116a, 116b and counter rotating aft propulsion assemblies 116c, 116d. Alternatively or additionally, yaw control or torque balance of aircraft 100 during VTOL operations may be achieved by counter rotating propulsion assemblies 116a, 116c of boom 106a and counter rotating propulsion assemblies 116b, 116d of boom 106b. Torque imbalances of aircraft 100 may also be controlled by utilizing differential longitudinal thrust vectoring of one or more of the propulsion assemblies 116a, 116b, 116c, 116d and/or utilizing torque offset of one or more of the propulsion assemblies 116a, 116b, 116c, 116d. It is noted that, changes in rotor speed and/or changes in blade pitch may affect the torque balance of aircraft 100, thus implementation of different torque balancing techniques under different conditions may be desirable.

Additionally, operational changes of certain ones of the propulsion assemblies within the distributed propulsion system, along with control of control surfaces, such as flaperons 105a-105D, enable pitch, yaw, and roll control of aircraft 100 during airplane mode operations. For example, pitch control may be achieved through differential activation of the fore flaperons 105a, 105b relative to the aft flaperons 105c, 105d. As another example, roll control may be achieved through differential activation of one or both of the right side flaperons 105a, 105c relative to one or both of the left side flaperons 105b, 105d, it being understood that roll control is most likely achieved through differential activation/deflection of only aft flaperons 105c, 105d. Yaw control or torque balance of aircraft 100 during airplane mode operations may be achieved by differential thrust of the right propulsion assemblies 116a, 116c, relative to the left propulsion assemblies 116b, 116d, or by rudders on vertical stabilizers 112a, 112b.

Propulsion assemblies 116a-116d may preferably be standardized and interchangeable units that are most preferably line replaceable units enabling easy installation and removal from aircraft 100. In addition, the use of line replaceable units is beneficial in maintenance situations if a fault is discovered with one of the propulsion assemblies. In this case, the faulty propulsion assembly can be decoupled from aircraft 100 by simple operations such as unbolting structural members, disconnecting communication lines and other suitable procedures. Another propulsion assembly can then be attached to aircraft 100 by coupling communication lines, bolting structural members together and other suitable procedures. Additionally, in certain embodiments, the wings and booms are easily disassembled for portability and ease of storage.

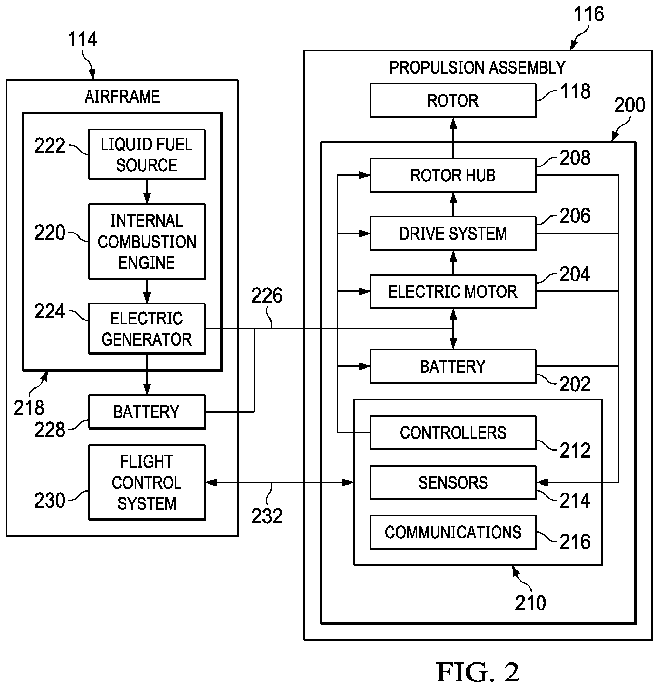

As best seen in FIGURE 2, each propulsion assembly 116 includes a nacelle 200 that houses one or more batteries 202, an electric motor 204, a drive system 206, a rotor hub 208, and an electronics node 210 including, for example, controllers 212, sensors 214 and communications elements 216 as well as other components suitable for use in the operation of a propulsion assembly. Each propulsion assembly 116 also includes a rotor 118 having a plurality of rotor blades that are securably attached to rotor hub 208. The rotor blades may have a fixed pitch or may be operable for pitch changes including, for example, collective and/or cyclic pitch changes. In addition, each propulsion assembly 116 may be operable for independent thrust vectoring.

In the illustrated embodiment, aircraft 100 has an electrical energy source depicted as a liquid fuel based electrical energy generation system 218 that is housed within airframe 114 such as within fuselage 102, wing 104 and/or booms 106. Electrical energy generation system 218 preferably includes one or more internal combustion engines 220. Electrical energy generation system 218 also includes one or more fuel tanks depicted as liquid fuel sources 222. In operation, internal combustion engine 220 is used to drive an electric generator 224 to produce electrical energy. This electrical energy is feed to each propulsion assemblies 106 via communication lines 226 within airframe 114 to directly power electric motors 204 and/or for storage within batteries 202. This type of hybrid power system is beneficial as the energy density of liquid fuel exceeds that of batteries enabling greater endurance for aircraft 100.

Alternatively or additionally, airframe 114 may house one or more batteries 228 that may serve as the electrical energy source for propulsion assemblies 106. Batteries 228 may be charged by electrical energy generation system 218 and/or may be charged at a ground station. Batteries 228 may also be interchangeably removed and installed to enable efficient refueling which may be particularly beneficial in embodiments of aircraft 100 wherein the sole electrical energy source are batteries 228. In embodiments having both batteries 228 and electrical energy generation system 218, batteries 228 may provide a backup electrical power source to enable aircraft 100 to safely land in the event of a failure in electrical energy generation system 218. As another alternative, propulsion assemblies 116 may include hydraulic motors operated within a common hydraulic fluid system wherein one or more high pressure hydraulic sources or generators are housed within airframe 114 to provide power to each of the hydraulic motors.

In the illustrated embodiment, aircraft 100 has a flight control system 230 that is housed within airframe 114. Flight control system 230, such as a digital flight control system, is preferably a redundant flight control system and more preferably a triply redundant flight control system including three independent flight control computers. Use of triply redundant flight control system 230 improves the overall safety and reliability of aircraft 100 in the event of a failure in flight control system 230. Flight control system 230 preferably includes non-transitory computer readable storage media including a set of computer instructions executable by one or more processors for controlling the operation of the distributed propulsion system. Flight control system 230 may be implemented on one or more general-purpose computers, special purpose computers or other machines with memory and processing capability.

For example, flight control system 230 may include one or more memory storage modules including, but is not limited to, internal storage memory such as random-access memory, non-volatile memory such as read only memory, removable memory such as magnetic storage memory, optical storage, solid-state storage memory or other suitable memory storage entity. Flight control system 230 may be a microprocessor-based system operable to execute program code in the form of machine-executable instructions. In addition, flight control system 230 may be selectively connectable to other computer systems via a proprietary encrypted network, a public encrypted network, the Internet or other suitable communication network that may include both wired and wireless connections.

Flight control system 230 communicates via a wired and/or wireless communications network 232 with electronics node 210 of each propulsion assembly 116. Flight control system 230 receives sensor data from and sends flight command information to electronics nodes 210 such that each propulsion assembly 116 may be individually and independently controlled and operated. In both manned and unmanned missions, flight control system 230 may autonomously control some or all aspects of flight operation for aircraft 100. Flight control system 230 may also be operable to communicate with one or more remote systems, via a wireless communications protocol. The remote systems may be operable to receive flight data from and provide commands to flight control system 230 to enable remote flight control over some or all aspects of flight operation for aircraft 100, in both manned and unmanned missions. In manned missions, a pilot within aircraft 100 may receive flight data from and provide commands to flight control system 230 to enable onboard pilot control over some or all aspects of flight operation for aircraft 100. In particular, transitions of aircraft 100 between the vertical lift orientation and the forward thrust orientation may be accomplished responsive to onboard pilot flight control, remote flight control, autonomous flight control and combinations thereof.

As best seen in FIGUREs 1A, 1C, IE, 1G, aircraft 100 has a vertical takeoff and landing flight mode wherein the distributed propulsion system is in its vertical lift orientation, in which each rotor 118a, 118b, 118c, 118d, has a generally horizontal orientation taking into account the attitude of aircraft 100. Flight control system 230 independently controls and operates each propulsion assembly 116a, 116b, 116c, 116d to generate lift as well as provide pitch, yaw and roll control. In the illustrated configuration, the propwash generated by forward propulsion assemblies 116a, 116b creates a minimum download on airframe 114 impeded only by forward ends of booms 106a, 106b. The propwash generated by aft propulsion assemblies 116c, 116b creates a minimum download on airframe 114 impeded only by the aft ends of booms 106a, 106b and spanwise flow on the vertical tail. This unique configuration of propulsion assemblies 116a, 116b, 116c on airframe 114 provides high lift efficiency for aircraft 100.

As best seen in FIGUREs 1B, ID, IF, 1H, aircraft 100 has a forward flight, or airplane, mode, in which the distributed propulsion system is in its forward thrust orientation, in each rotor 118a, 118b, 118c, 118d has a generally vertical orientation taking into account the attitude of aircraft 100. Flight control system 230 independently controls and operates each propulsion assembly 116a, 116b, 116c, 116d to generate the required thrust with wings 104a, 104b providing lift and with aerodynamic surfaces including as flaperons 105a, 105b, 105c, 105d and tail assemblies 112a, 112b providing pitch, yaw and roll control. In the illustrated configuration, the propwash generated by forward propulsion assemblies 116a, 116b travels generally in the chordwise direction of wing 104 and the propwash generated by aft propulsion assemblies 116c, 116b creates a minimum download on airframe 114. For example, tail assemblies 112a, 112b operate in a dynamic pressure ratio of > 1.0 in the forward flight mode which contributes to the directional stability of aircraft 100 in forward flight mode. In addition, as the thrust requirements in forward flight mode are reduced compared to the lift requirements of vertical takeoff and landing flight mode, during forward flight, flight control system 230 may reduce the rotational speeds of some or all of propulsion assemblies 116a, 116b, 116c. Alternatively or additionally, flight control system 230 may shut down certain of the propulsion assemblies 116a, 116b, 116c during forward flight, in which case, the associated rotor blades may be allowed to windmill, may be locked against rotation or may be folded and locked. For example, flight control system 230 may shut down forward propulsion assemblies 116a, 116b while operating aft propulsion assembly 116c during forward flight.

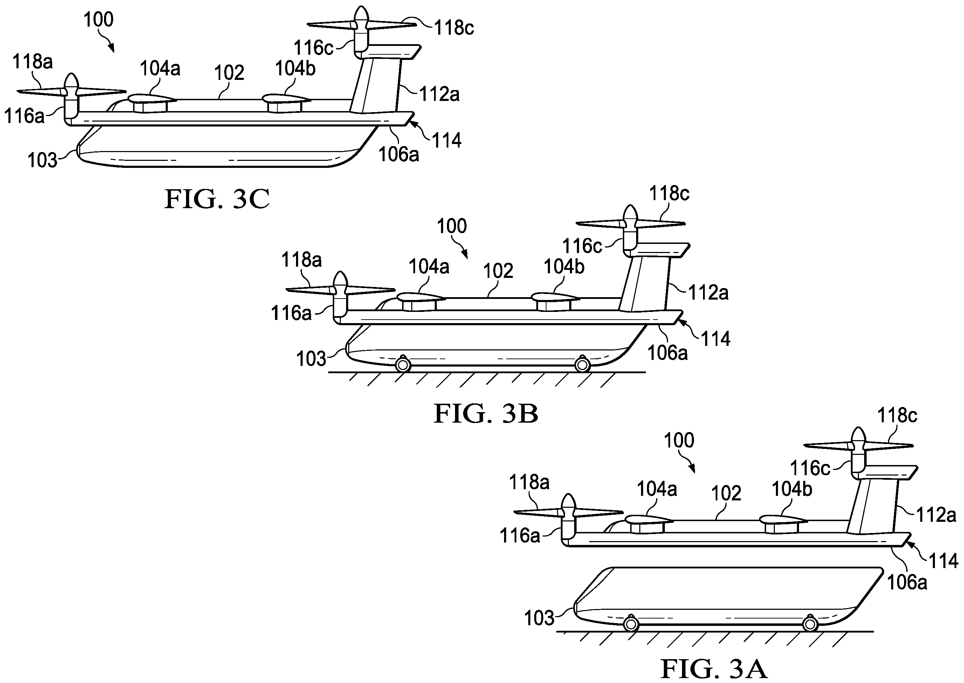

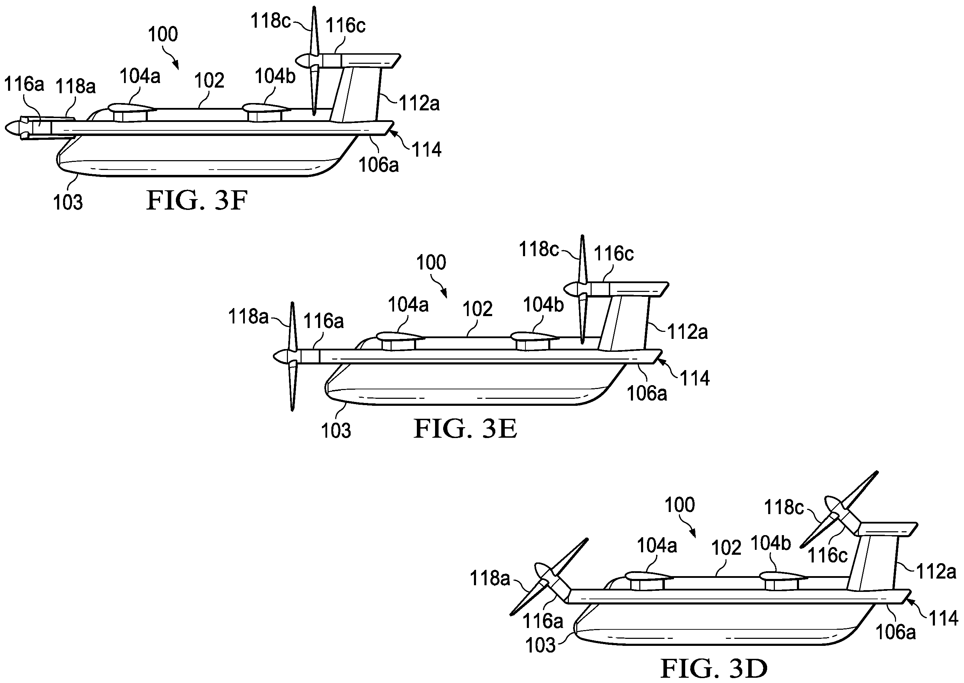

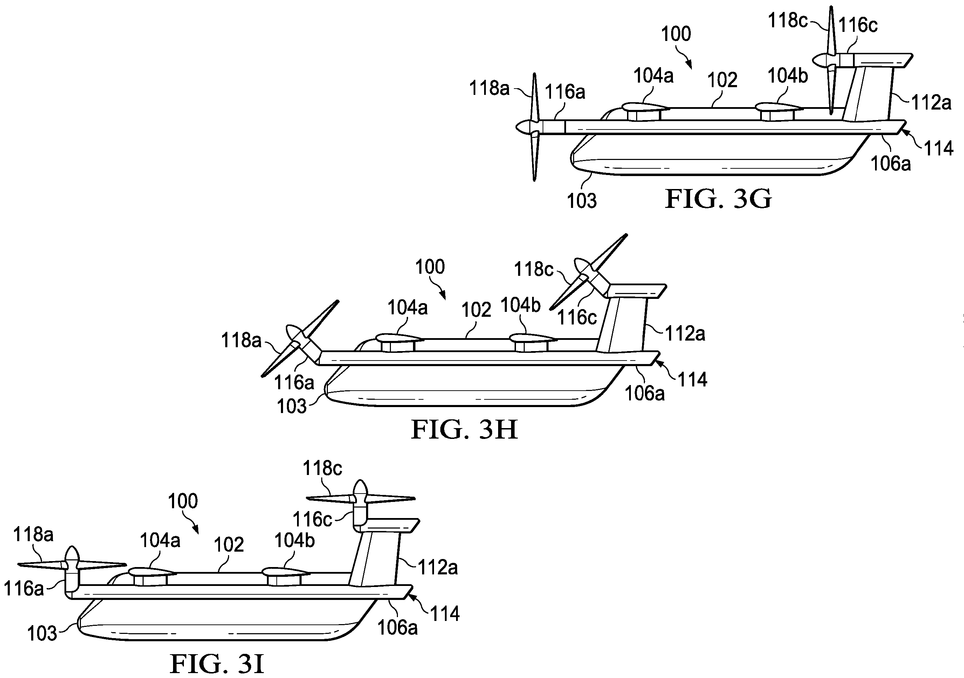

Referring next to FIGURES 3A-3L, a sequential flight-operating scenario of aircraft 100 is depicted. As discussed herein, payload module 103 is selectively attachable to airframe 114 such that a single airframe can be operably coupled to and decoupled from numerous payload modules for numerous missions over time. As best seen in FIGURE 3A, payload module 103 is positioned on a surface at a current location such as at a worksite, in a military theater, on the flight deck of an aircraft carrier or other location. In the illustrated embodiment, payload module 103 includes retractable wheel assemblies that enable ground transportation of payload module 103. In other embodiments, payload module 103 may include skids or may have another suitable ground interface. As illustrated, airframe 114 is currently in an approach pattern near payload module 103 in its vertical takeoff and landing mode with all propulsion assemblies 116 operating. For example, airframe 114 may have been dispatched from a staging location to perform the mission of transporting payload module 103 from the current location to a destination. Airframe 114 may be operated responsive to autonomous flight control based upon a flight plan preprogrammed into flight control system 230 or may be operated responsive to remote flight control. In either case, airframe 114 may be operable to identify the current location of the payload module 103 using, for example, global positioning or other location-based system information. Payload module 103 may comprise one or more of a fuel module, a cargo module, a weapons module, a communications module and a sensor module

As best seen in FIGURE 3B, airframe 114 has been connected with payload module 103 to create a mechanical coupling and, in some embodiments, a communication channel therebetween. As best seen in FIGURE 3C, payload module 103 is fully supported by airframe 114 operating in VTOL mode. Once payload module 103 is attached to airframe 114, the flight control system of airframe 114 may be responsive to autonomous flight control, remote flight control, onboard pilot flight control or any combination thereof. For example, in manned missions, it may be desirable to utilize onboard pilot flight control of a pilot within payload module 103 during certain maneuvers such at takeoff and landing but rely on remote or autonomous flight control during periods of forward flight.

Regardless of the chosen flight control mode, each of the propulsion assemblies 116 is independently controllable during flight operations. For example, as best seen in FIGURE 3C, to aid in stabilization during VTOL operations including pitch, roll and yaw control during hover, it may be desirable to adjust the thrust output, torque output and/or thrust vector of one or more of propulsion assemblies 116 as discussed herein. After vertical assent to the desired elevation, aircraft 100 may begin the transition from vertical takeoff to forward flight. As best seen in FIGUREs 3C-3E, as aircraft 100 transitions from vertical takeoff and landing flight mode to forward flight, or airplane, mode, the forward propulsion assemblies transition from the vertical lift orientation, as best seen in FIGURE 3C, to the forward thrust orientation, as best seen in FIGURE 3E, by tilting from an upwardly pointing orientation to a forward pointing orientation. Likewise, the aft propulsion assemblies transition from the vertical lift orientation, as best seen in FIGURE 3C, to the forward thrust orientation, as best seen in FIGURE 3E, by tilting from an upwardly pointing orientation to a forwardly pointing orientation. It is noted that aircraft 100 remains in a generally horizontal attitude during this transition for the safety and comfort of passengers, crew, and/or cargo carried in aircraft 100.

Once aircraft 100 has completed the transition to forward flight mode, certain of the propulsion assemblies 116 may be operated at reduced speed or shut down as the thrust requirements in forward flight mode are reduced compared to the thrust requirements of vertical takeoff and landing flight mode. For example, as best seen in FIGURE 3F, the forward propulsion assemblies have been shut down and the rotor blades have folded to reduce drag. Alternatively, after the forward propulsion assemblies have been shut down the rotor blades may be feathered with the rotor hubs unlock allowing the rotors to windmill or the rotors may be locked from rotating without folding.

When aircraft 100 begins its approaches to the destination, any propulsion assemblies 116 that were shut down or operated at a reduced speed are reengaged to provide full propulsion capabilities, as best seen in FIGURE 3G. Aircraft 100 may now begin its transition from forward flight mode to vertical takeoff and landing flight mode. As best seen in FIGUREs 3G-3I, as aircraft 100 transitions from forward flight mode to vertical takeoff and landing flight mode, the forward propulsion assemblies transition from the forward thrust orientation, as best seen in FIGURE 3G, to the vertical lift orientation, as best seen in FIGURE 3I, by tilting from the forward pointing orientation to the upward pointing orientation. Likewise, the aft propulsion assemblies transition from the forward thrust orientation, as best seen in FIGURE 3G, to the vertical lift orientation, as best seen in FIGURE 3I, by tilting from the aftwardly pointing orientation to the downwardly pointing orientation. It is noted that aircraft 100 remains in a generally horizontal attitude during this transition for the safety and comfort of passengers, crew and/or cargo carried in aircraft 100.

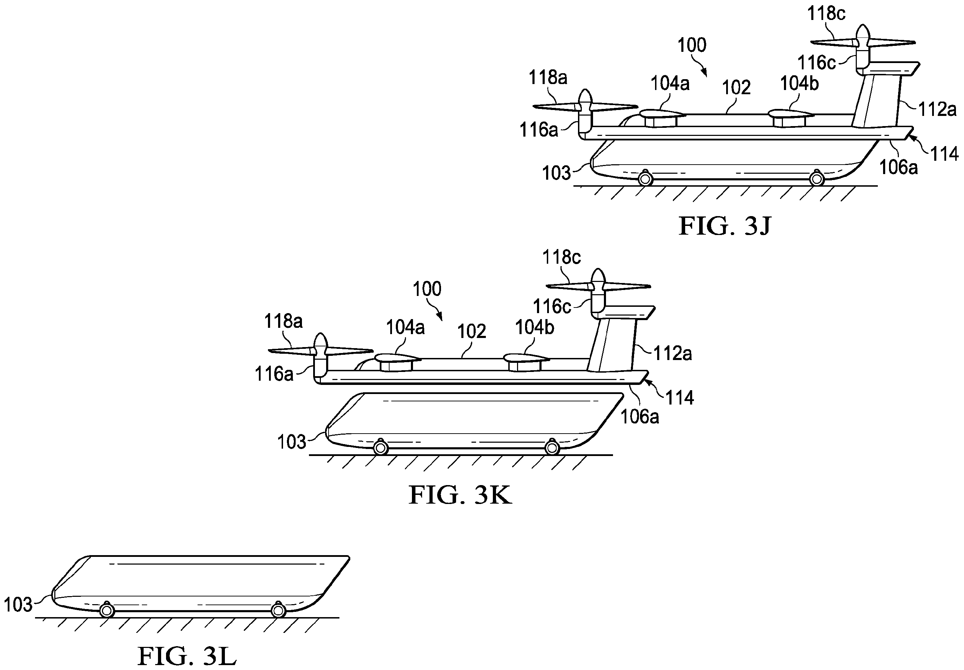

Once aircraft 100 has completed the transition to vertical takeoff and landing flight mode, as best seen in FIGURE 3I, aircraft 100 may commence its vertical descent to a landing surface at the destination location. Payload module 103 may now lower its wheel assemblies to provide ground support for landing aircraft 100, as best seen in FIGURE 3J. Airframe 114 is now decoupled from payload module 103, as best seen in FIGURE 3K. After transporting and releasing payload module 103 at the destination, airframe 114 may depart from the destination for another location and payload module 103 may be repositioned to a desired location using wheel assemblies to enable ground transportation, as best seen in FIGURE 3L.

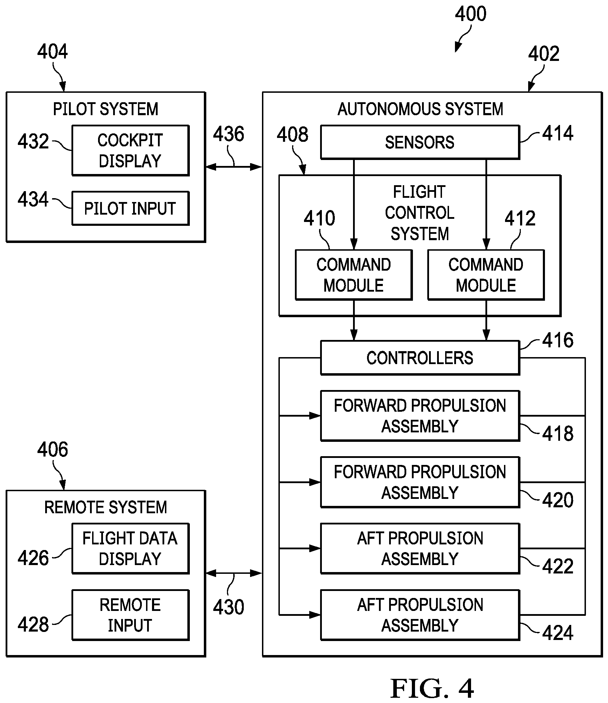

Referring additionally to FIGURE 4 in the drawings, a block diagram depicts an aircraft control system 400 operable for use with aircraft 100 of the present disclosure. In the illustrated embodiment, system 400 includes three primary computer-based subsystems; namely, an autonomous system 402, a pilot system 404 and a remote system 406. As discussed herein, the aircraft of the present disclosure may be operated autonomously responsive to commands generated by flight control system 408 that preferably includes a non-transitory computer readable storage medium including a set of computer instructions executable by a processor. Flight control system 408 may be a triply redundant system implemented on one or more general-purpose computers, special purpose computers or other machines with memory and processing capability. For example, flight control system 408 may include one or more memory storage modules including, but is not limited to, internal storage memory such as random-access memory, non-volatile memory such as read only memory, removable memory such as magnetic storage memory, optical storage, solid-state storage memory or other suitable memory storage entity. Flight control system 408 may be a microprocessor-based system operable to execute program code in the form of machine-executable instructions. In addition, flight control system 408 may be selectively connectable to other computer systems via a proprietary encrypted network, a public encrypted network, the Internet or other suitable communication network that may include both wired and wireless connections.

In the illustrated embodiment, flight control system 408 includes a command module 410 and a monitoring module 412. It is to be understood by those skilled in the art that these and other modules executed by flight control system 408 may be implemented in a variety of forms including hardware, software, firmware, special purpose processors and combinations thereof. Flight control system 408 receives input from a variety of sources including internal sources such as sensors 414, controllers 416, propulsion assemblies 418, 420, 422, 424 and pilot system 404 as well as external sources such as remote system 406, global positioning system satellites or other location positioning systems and the like. For example, flight control system 408 may receive a flight plan including starting and ending locations for a mission from pilot system 404 and/or remote system 406. Thereafter, flight control system 408 is operable to autonomously control all aspects of flight of an aircraft of the present disclosure.

For example, during the various operating modes of aircraft 100 including vertical takeoff and landing flight mode, hover flight mode, forward flight mode and transitions therebetween, command module 410 provides commands to controllers 416. These commands enable independent operation of each propulsion assembly 418, 420, 422, 424 including, for example, controlling the rotational speed of the rotors, changing the pitch of the rotor blades, adjusting the thrust vectors and the like. In addition, these commands enable transition of aircraft 100 between the vertical lift orientation and the forward thrust orientation. Flight control system 408 receives feedback from controllers 416 and each propulsion assembly 418, 420, 422, 424. This feedback is processes by monitoring module 412 that can supply correction data and other information to command module 410 and/or controllers 416. Sensors 414, such as positioning sensors, attitude sensors, speed sensors, environmental sensors, fuel sensors, temperature sensors, location sensors and the like also provide information to flight control system 408 to further enhance autonomous control capabilities.

Some or all of the autonomous control capability of flight control system 408 can be augmented or supplanted by a remote flight control system 406. Remote system 406 may include one or computing systems that may be implemented on general-purpose computers, special purpose computers or other machines with memory and processing capability. For example, the computing systems may include one or more memory storage modules including, but is not limited to, internal storage memory such as random-access memory, non-volatile memory such as read only memory, removable memory such as magnetic storage memory, optical storage memory, solid-state storage memory or other suitable memory storage entity. The computing systems may be microprocessor-based systems operable to execute program code in the form of machine-executable instructions. In addition, the computing systems may be connected to other computer systems via a proprietary encrypted network, a public encrypted network, the Internet or other suitable communication network that may include both wired and wireless connections. The communication network may be a local area network, a wide area network, the Internet, or any other type of network that couples a plurality of computers to enable various modes of communication via network messages using as suitable communication techniques, such as transmission control protocol/internet protocol, file transfer protocol, hypertext transfer protocol, internet protocol security protocol, point-to-point tunneling protocol, secure sockets layer protocol or other suitable protocol. Remote system 106 communicates with flight control system 408 via a communication link 430 that may include both wired and wireless connections.

Remote system 406 preferably includes one or more flight data display devices 426 configured to display information relating to one or more aircraft of the present disclosure. Display devices 426 may be configured in any suitable form, including, for example, liquid crystal displays, light emitting diode displays, cathode ray tube displays or any suitable type of display. Remote system 406 may also include audio output and input devices such as a microphone, speakers and/or an audio port allowing an operator to communicate with, for example, a pilot on board aircraft 100. The display device 426 may also serve as a remote input device 428 if a touch screen display implementation is used, however, other remote input devices, such as a keyboard or joysticks, may alternatively be used to allow an operator to provide control commands to an aircraft being operated responsive to remote control.

Some or all of the autonomous and/or remote flight control of an aircraft of the present disclosure can be augmented or supplanted by onboard pilot flight control from pilot system 404. Pilot system 404 may be integrated with autonomous system 402 or may be a standalone system preferably including a non-transitory computer readable storage medium including a set of computer instructions executable by a processor and may be implemented by a general-purpose computer, a special purpose computer or other machine with memory and processing capability. Pilot system 404 may include one or more memory storage modules including, but is not limited to, internal storage memory such as random-access memory, non- volatile memory such as read only memory, removable memory such as magnetic storage memory, optical storage memory, solid-state storage memory or other suitable memory storage entity. Pilot system 404 may be a microprocessor-based system operable to execute program code in the form of machine-executable instructions. In addition, pilot system 404 may be connectable to other computer systems via a proprietary encrypted network, a public encrypted network, the Internet or other suitable communication network that may include both wired and wireless connections. Pilot system 404 may communicate with flight control system 408 via a communication channel 436 that preferably includes a wired connection.

Pilot system 404 preferably includes a cockpit display device 432 configured to display information to an onboard pilot. Cockpit display device 432 may be configured in any suitable form, including, for example, as one or more display screens such as liquid crystal displays, light emitting diode displays and the like or any other suitable display type including, for example, a display panel, a dashboard display, an augmented reality display or the like. Pilot system 404 may also include audio output and input devices such as a microphone, speakers and/or an audio port allowing an onboard pilot to communicate with, for example, air traffic control or an operator of a remote system. Cockpit display device 432 may also serve as a pilot input device 434 if a touch screen display implementation is used, however, other user interface devices may alternatively be used to allow an onboard pilot to provide control commands to an aircraft being operated responsive to onboard pilot control including, for example, a control panel, mechanical control devices or other control devices. As should be apparent to those having ordinarily skill in the art, through the use of system 400, an aircraft of the present disclosure can be operated responsive to a flight control protocol including autonomous flight control, remote flight control or onboard pilot flight control and combinations thereof. The embodiments described throughout this disclosure provide numerous technical advantages, including by way of example, providing additional maximum lift capacity and improving short take off capabilities by providing a sealing mechanism for a slotted flap or flaperon using a design that does not incur the additional weight and complexity penalties of prior sealing mechanisms.

Embodiments shown and described herein provide good all-axis control power in both VTOL and airplane modes and are easily sized for all axis stability in airplane mode. The wings, propellers, vehicle length, and boom width are easily scalable for desired characteristics. The vehicle is self-contained and may operate with or without the payload module and the batteries and electronics may be housed within the fuselage. As previously noted, in some embodiments, the fuselage may be omitted, with the aircraft including just the wing and boom structure. In an alternative embodiment, the vertical tails could be moved forward along the respective booms and aft motors could be installed under the booms thrusting downward. In such a configuration, aft motors would be rotated up for aft thrusting.

Although several embodiments have been illustrated and described in detail, numerous other changes, substitutions, variations, alterations, and/or modifications are possible without departing from the scope of the present invention, as defined by the appended claims. The particular embodiments described herein are illustrative only and may be modified and practiced in different but equivalent manners, as would be apparent to those of ordinary skill in the art having the benefit of the teachings herein. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, substitutions, variations, alterations, and modifications may be ascertained to one of ordinary skill in the art and it is intended that the present disclosure encompass all such changes, variations, alterations, and modifications as falling within the scope of the appended claims.

## Claims

1. An aircraft (100) comprising:
an airframe (114) including first and second wings (104a, 104b), each of the first and second wings (104a, 104b) having first and second oppositely disposed wing tips (105e-105h), wherein the first and second wings (104a, 104b) are arranged in a tandem wing configuration or a canard configuration;
first and second booms (106a, 106b) respectively extending longitudinally between the first and second wings (104a, 104b), the first and second booms (106a, 106b) each having forward and aft ends;
first and second tail assemblies (112a, 112b) respectively coupled to aft ends of the first and second booms (106a, 106b);
first and second forward propulsion assemblies (116a, 116b) respectively coupled to the forward ends of the first and second booms (106a, 106b), wherein the first and second forward propulsion assemblies (116a, 116b) are tiltable between a vertical takeoff and landing ("VTOL") flight mode orientation and a forward flight mode orientation;
first and second aft propulsion assemblies (116c, 116d) respectively coupled to upper ends of the tail assemblies (112a, 112b), wherein the first and second aft propulsion assemblies (116c, 116d) are tiltable between a VTOL flight mode orientation and a forward flight mode orientation; and
a payload module (103) removably coupled to the airframe (114).

2. The aircraft (100) of claim 1, wherein the aircraft (100) is a tiltrotor aircraft (100) comprising:
a longitudinally extending fuselage (102) having a forward end and an aft end;
the first wing (104a) extending laterally from the fuselage (102) proximate the forward end thereof, wherein the first and second oppositely disposed wing tips (105e-105h) are distal from the fuselage (102); and
the second wing (104b) extending laterally from the fuselage (102) proximate the aft end thereof, wherein the first and second oppositely disposed wing tips (105e-105h) are distal from the fuselage (102).

3. The aircraft (100) of claim 1 or of claim 2, wherein in the VTOL flight mode orientation, the first and second forward propulsion assemblies (116a, 116b) are oriented upward, and in the forward flight mode orientation, the first and second forward propulsion assemblies (116a, 116b) are tilted forward.

4. The aircraft (100) of any preceding claim, wherein in the VTOL flight mode orientation, the first and second aft propulsion assemblies (116c, 116d) are oriented upward, and in the forward flight mode orientation, the first and second aft propulsion assemblies (116c, 116d) are tilted forward and extend over the respective one of the first and second booms (106a, 106b).

5. The aircraft (100) of any preceding claim, further comprising a flight control system (230) operably associated with the forward propulsion assemblies (116a, 116b) and the aft propulsion assemblies (116c, 116d), the flight control system (230) operable to independently control each of the propulsion assemblies (116) including transitions between the VTOL flight mode and the forward flight mode orientations.

6. The aircraft (100) of claim 5, wherein the flight control system (230) is operable to command operation of the propulsion assemblies (116) responsive to at least one of onboard pilot flight control, remote flight control, autonomous flight control and combinations thereof.

7. The aircraft (100) of any preceding claim, further comprising a fuselage (102) connected longitudinally between the first and second wings (104a, 104b).

8. The aircraft (100) of any preceding claim, wherein the payload module (103) coupled to the wings comprises an unmanned module.

9. The aircraft (100) of any preceding claim, wherein the payload module (103) coupled to the wing is selected from the group consisting of a fuel module, a cargo module, a weapons module, a communications module and a sensor module.

10. The aircraft (100) of any preceding claim, wherein the first and second tail assemblies (112a, 112b) each comprise a vertical stabilizer.

11. The aircraft (100) of any preceding claim, wherein the first and second tail assemblies (112a, 112b) each comprise a rudder.

12. The aircraft (100) as recited in any preceding claim, further comprising a power system including at least one electric motor (204) operably associated with each of one or more rotors (118) and an electric energy source (218).

## Patentansprüche

1. Flugzeug (100), umfassend:
eine Flugzeugzelle (114) einschließlich einem ersten und einem zweiten Flügel (104a, 104b), wobei der erste und der zweite Flügel (104a, 104b) jeweils eine erste und eine zweite Flügelspitze (105e-105h) aufweisen, die einander gegenüberliegend angeordnet sind, wobei der erste und der zweite Flügel (104a, 104b) in einer Tandemflügelkonfiguration oder einer Canard-Konfiguration eingerichtet sind;
einen ersten und einen zweiten Ausleger (106a, 106b), die sich jeweils in Längsrichtung zwischen dem ersten und dem zweiten Flügel (104a, 104b) erstrecken, wobei der erste und der zweite Ausleger (106a, 106b) jeweils ein vorderes und ein hinteres Ende aufweisen;
eine erste und eine zweite Heckbaugruppe (112a, 112b), die jeweils an die hinteren Enden des ersten und des zweiten Auslegers (106a, 106b) gekoppelt sind;
eine erste und eine zweite Vorwärtsantriebsbaugruppe (116a, 116b), die jeweils mit den vorderen Enden des ersten und des zweiten Auslegers (106a, 106b) gekoppelt sind, wobei die erste und die zweite Vorwärtsantriebsbaugruppe (116a, 116b) zwischen einer Vertikalstart- und -lande- ("VTOL"-) Flugmodusausrichtung und einer Vorwärtsflugmodusausrichtung kippbar sind;
erste und zweite hintere Antriebsbaugruppen (116c, 116d), die jeweils mit den oberen Enden der Heckbaugruppen (112a, 112b) gekoppelt sind, wobei die ersten und die zweiten hinteren Antriebsbaugruppen (116c, 116d) zwischen einer VTOL-Flugmodusausrichtung und einer Vorwärtsflugmodusausrichtung kippbar sind; und
ein Nutzlastmodul (103), das abnehmbar an die Flugzeugzelle (114) gekoppelt ist.

2. Flugzeug (100) nach Anspruch 1, wobei das Flugzeug (100) ein Kipprotorflugzeug (100) ist, umfassend:
einen sich in Längsrichtung erstreckenden Rumpf (102), der ein vorderes und einem hinteres Ende aufweist;
wobei sich der erste Flügel (104a) seitlich vom Rumpf (102) nahe dessen vorderem Ende erstreckt, wobei die erste und due zweite gegenüberliegend angeordnete Flügelspitze (105e-105h) distal vom Rumpf (102) sind; und
wobei sich der zweite Flügel (104b) seitlich vom Rumpf (102) nahe dessen hinterem Ende erstreckt, wobei die erste und due zweite gegenüberliegend angeordnete Flügelspitze (105e-105h) distal vom Rumpf (102) sind.

3. Flugzeug (100) nach Anspruch 1 oder nach Anspruch 2, wobei in der VTOL-Flugmodusausrichtung die erste und die zweite Vorwärtsantriebsbaugruppe (116a, 116b) nach oben ausgerichtet sind und in der Vorwärtsflugmodusausrichtung die erste und die zweite Vorwärtsantriebsbaugruppe (116a, 116b) nach vorne gekippt sind.

4. Flugzeug (100) nach einem der vorstehenden Ansprüche, wobei in der VTOL-Flugmodusausrichtung die erste und die zweite hintere Antriebsbaugruppe (116c, 116d) nach oben ausgerichtet sind und in der Vorwärtsflugmodusausrichtung die erste und die zweite hintere Antriebsbaugruppe (116c, 116d) nach vorne gekippt sind und sich über den jeweiligen ersten und zweiten Ausleger (106a, 106b) erstrecken.

5. Flugzeit (100) nach einem der vorstehenden Ansprüche, weiter umfassend ein Flugsteuerungssystem (230), das mit den Vorwärtsantriebsbaugruppen (116a, 116b) und den hinteren Antriebsbaugruppen (116c, 116d) wirkverbunden ist, wobei das Flugsteuerungssystem (230) betreibbar ist, um jede der Antriebsbaugruppen (116) unabhängig zu steuern, einschließlich Übergängen zwischen der VTOL-Flugmodus- und der Vorwärtsflugmodus-Ausrichtung.

6. Flugzeug (100) nach Anspruch 5, wobei das Flugsteuerungssystem (230) betreibbar ist, um den Betrieb der Antriebsbaugruppen (116) als Reaktion auf mindestens eine der folgenden Funktionen zu steuern: Flugsteuerung durch den Bordpiloten, Flugfernsteuerung, autonome Flugsteuerung und Kombinationen davon.

7. Flugzeug (100) nach einem der vorstehenden Ansprüche, weiter umfassend einen Rumpf (102), der in Längsrichtung zwischen dem ersten und dem zweiten Flügel (104a, 104b) verbunden ist.

8. Flugzeug (100) nach einem der vorstehenden Ansprüche, wobei das an die Flügel gekoppelte Nutzlastmodul (103) ein unbemanntes Modul umfasst.

9. Flugzeug (100) nach einem der vorstehenden Ansprüche, wobei das an den Flügel gekoppelte Nutzlastmodul (103) aus der Gruppe ausgewählt wird, die aus einem Treibstoffmodul, einem Frachtmodul, einem Waffenmodul, einem Kommunikationsmodul und einem Sensormodul besteht.

10. Flugzeug (100) nach einem der vorstehenden Ansprüche, wobei die erste und die zweite Heckbaugruppe (112a, 112b) jeweils ein Seitenleitwerk umfassen.

11. Flugzeug (100) nach einem der vorstehenden Ansprüche, wobei die erste und die zweite Heckbaugruppe (112a, 112b) jeweils ein Seitenruder umfassen.

12. Flugzeug (100) nach einem der vorstehenden Ansprüche, weiter umfassend ein Triebwerkssystem, das mindestens einen Elektromotor (204), der mit jedem von einem oder mehreren Rotoren (118) wirkverbunden ist, und eine elektrische Energiequelle (218) einschließt.

## Revendications

1. Aéronef (100) comprenant :
une cellule (114) incluant des première et seconde ailes (104a, 104b), chacune des première et seconde ailes (104a, 104b) ayant des premier et second saumons d'aile disposés de manière opposée (105e-105h), dans laquelle les première et seconde ailes (104a, 104b) sont agencées dans une configuration d'ailes en tandem ou une configuration en canard ;
des première et seconde traverses (106a, 106b) s'étendant respectivement longitudinalement entre les première et seconde ailes (104a, 104b), les première et seconde traverses (106a, 106b) ayant chacune des extrémités avant et arrière ;
des premier et seconds ensembles de queue (112a, 112b) respectivement couplés aux extrémités arrière des première et seconde traverses (106a, 106b) ;
des premier et second ensembles de propulsion avant (116a, 116b) respectivement couplés aux extrémités avant des première et seconde traverses (106a, 106b), dans lesquels les premier et second ensembles de propulsion avant (116a, 116b) sont inclinables entre une orientation en mode de vol à décollage et atterrissage verticaux (« ADAV ») et une orientation en mode de vol vers l'avant ;
des premier et second ensembles de propulsion arrière (116c, 116d) respectivement couplés aux extrémités supérieures des ensembles de queue (112a, 112b), dans lesquels les premier et second ensembles de propulsion arrière (116c, 116d) sont inclinables entre une orientation en mode de vol ADAV et une orientation en mode de vol vers l'avant ; et
un module de charge utile (103) couplé de manière amovible à la cellule (114).

2. Aéronef (100) selon la revendication 1, dans lequel l'aéronef (100) est un aéronef à rotors basculants (100) comprenant :
un fuselage s'étendant longitudinalement (102) ayant une extrémité avant et une extrémité arrière ;
la première aile (104a) s'étendant latéralement à partir du fuselage (102) à proximité de son extrémité avant, dans laquelle les premier et second saumons d'aile disposés de manière opposée (105e-105h) sont distaux du fuselage (102) ; et
la seconde aile (104b) s'étendant latéralement à partir du fuselage (102) à proximité de son extrémité arrière, dans laquelle les premier et second saumons d'aile disposés de manière opposée (105e-105h) sont distaux du fuselage (102).

3. Aéronef (100) selon la revendication 1 ou la revendication 2, dans lequel, dans l'orientation en mode de vol ADAV, les premier et second ensembles de propulsion avant (116a, 116b) sont orientés vers le haut, et dans l'orientation en mode de vol vers l'avant, les premier et second ensembles de propulsion avant (116a, 116b) sont inclinés vers l'avant.

4. Aéronef (100) selon l'une quelconque des revendications précédentes, dans lequel, dans l'orientation en mode de vol ADAV, les premier et second ensembles de propulsion arrière (116c, 116d) sont orientés vers le haut, et dans l'orientation en mode de vol vers l'avant, les premier et second ensembles de propulsion arrière (116c, 116d) sont inclinés vers l'avant et s'étendent sur l'une respective des première et seconde traverses (106a, 106b).

5. Aéronef (100) selon l'une quelconque des revendications précédentes, comprenant en outre un système de commande de vol (230) associé de manière opérationnelle aux ensembles de propulsion avant (116a, 116b) et aux ensembles de propulsion arrière (116c, 116d), le système de commande de vol (230) pouvant fonctionner pour commander indépendamment chacun des ensembles de propulsion (116) y compris des transitions entre les orientations en mode de vol ADAV et en mode de vol avant.

6. Aéronef (100) selon la revendication 5, dans lequel le système de commande de vol (230) peut fonctionner pour commander le fonctionnement des ensembles de propulsion (116) en réponse à au moins un d'une commande de vol pilote embarquée, d'une commande de vol à distance, d'une commande de vol autonome et de leurs combinaisons.

7. Aéronef (100) selon l'une quelconque des revendications précédentes, comprenant en outre un fuselage (102) connecté longitudinalement entre les première et seconde ailes (104a, 104b).

8. Aéronef (100) selon l'une quelconque des revendications précédentes, dans lequel le module de charge utile (103) couplé aux ailes comprend un module sans pilote.

9. Aéronef (100) selon l'une quelconque des revendications précédentes, dans lequel le module de charge utile (103) couplé à l'aile est sélectionné à partir du groupe constitué d'un module de carburant, d'un module de cargaison, d'un module d'armes, d'un module de communication et d'un module de capteur.

10. Aéronef (100) selon l'une quelconque des revendications précédentes, dans lequel les premier et second ensembles de queue (112a, 112b) comprennent chacun un stabilisateur vertical.

11. Aéronef (100) selon l'une quelconque des revendications précédentes, dans lequel les premier et second ensembles de queue (112a, 112b) comprennent chacun un gouvernail.

12. Aéronef (100) selon l'une quelconque des revendications précédentes, comprenant en outre un système d'alimentation incluant au moins un moteur électrique (204) fonctionnellement associé à chacun d'un ou plusieurs rotors (118) et une source d'énergie électrique (218).
